# EUROPÄISCHE PATENTSCHRIFT

(11) **EP 4 219 830 B1**
(45) Veröffentlichungstag und Bekanntmachung des Hinweises auf die Patenterteilung: **01.10.2025**
(21) Anmeldenummer: 23166307.1
(22) Anmeldetag: 01.07.2021
(51) Int. Cl.: E01B 29/28, B25B 21/00, B25B 21/02, B25B 23/00, B25G 1/06

(54) **GLEISBEARBEITUNGSMASCHINE UND VERFAHREN ZUR GLEISBEARBEITUNG**
TRACK WORKING MACHINE AND METHOD FOR TRACK WORKING
MACHINE DE TRAITEMENT DE VOIE ET PROCÉDÉ DE TRAITEMENT DE VOIE

(30) Priorität: 04.08.2020 WO PCT/EP2020/071928
(43) Veröffentlichungstag der Anmeldung: 02.08.2023
(62) Teilanmeldung aus: 21183152.4
(73) Patentinhaber: Robel Bahnbaumaschinen GmbH, 83395 Freilassing (DE)
(72) Erfinder: Koch, Bernhard, 83454 Anger (DE); Dieguez, Markus Fafian, 83416 Saaldorf-Surheim (DE)
(74) Vertreter: Rau, Schneck & Hübner Patentanwälte Rechtsanwälte PartGmbB

(56) Entgegenhaltungen:
- WO-A1-2019/207424
- WO-A1-2019/243756
- DE-A1- 102013 204 225
- FR-A1- 2 508 071

## Beschreibung

Die Erfindung betrifft eine Gleisbearbeitungsmaschine, insbesondere eine Schlagschraubmaschine zur Gleisbearbeitung. Ferner betrifft die Erfindung ein Verfahren zur Gleisbearbeitung mittels einer derartigen Gleisbearbeitungsmaschine.

Aus der WO 2019/228 609 A1 ist eine Schlagschraubmaschine zum Anziehen und Lösen von Gleisschraubverbindungen bekannt. In Bereichen des Gleises, in denen der zur Verfügung stehende Bearbeitungsraum eingeschränkt ist, wie beispielsweise in Weichen oder auf Brücken, ist eine derartige Schlagschraubmaschine oftmals in der Handhabung schwierig.

Aus der FR 2 508 071 A1 ist eine Gleisbearbeitungsmaschine zur Durchführung von Schraubarbeiten bekannt. Die Gleisbearbeitungsmaschine umfasst Griffe, einen Hydraulikmotor zum Antreiben eines Arbeitskopfes und einen Wagen, der über eine Verbindungseinheit mit dem Hydraulikmotor verbunden ist. Der Arbeitskopf ist zusammen mit dem Hydraulikmotor mittels der Handgriffe höhenverstellbar.

Eine Aufgabe der Erfindung besteht deshalb darin, eine verbesserte Gleisbearbeitungsmaschine zu schaffen, welche insbesondere einfach und flexibel einsetzbar ist.

Diese Aufgabe wird durch eine Gleisbearbeitungsmaschine mit den Merkmalen des Anspruchs 1 gelöst. Dadurch, dass die Gleisbearbeitungsmaschine eine Verbindungseinheit zum mechanischen Verbinden einer ersten Baueinheit mit einer zweiten Baueinheit und zum Reduzieren einer Längsabmessung der Gleisbearbeitungsmaschine entlang einer Drehachse eines Bearbeitungskopfs aufweist, kann die Längsabmessung an den zur Verfügung stehenden Bearbeitungsraum angepasst werden. Eine große Längsabmessung ist beispielsweise für den Bedienkomfort bei einer vertikalen Orientierung der Drehachse vorteilhaft. Eine geringe Längsabmessung kann notwendig sein, wenn die Gleisbearbeitung eine horizontale Orientierung der Drehachse erforderlich macht. Der von der Gleisbearbeitungsmaschine beanspruchte Bauraum kann mittels der Verbindungseinheit an den zur Verfügung stehenden Bearbeitungsraum flexibel angepasst werden. Hierdurch ist die Gleisbearbeitungsmaschine auch in beengten Bereichen des Gleises, wie beispielsweise in Weichen oder auf Brücken, verwendbar. Der Einsatzbereich der Gleisbearbeitungsmaschine ist somit vergrößert und die Gleisbearbeitungsmaschine ist besonders bedienerfreundlich und wirtschaftlich im Betrieb.

Dadurch, dass die erste Baueinheit einen Motor zum Drehantreiben des Bearbeitungskopfs aufweist, ist die Gleisbearbeitungsmaschine besonders wirtschaftlich herstellbar, effizient und robust im Betrieb. Der Motor ist vorzugsweise zum Drehantreiben des Schlagschraubwerks ausgebildet. Die erste Baueinheit kann somit den gesamten Antriebsstrang zum Drehantreiben des Bearbeitungskopfs aufweisen. Eine Relativbewegung von Komponenten des Antriebsstrangs zueinander zum Verlagern der Gleisbearbeitungsmaschine zwischen der ersten Bearbeitungsstellung und der zweiten Bearbeitungsstellung wird somit vermieden. Das Drehantreiben des Bearbeitungskopfs kann somit verschleißarm und effizient erfolgen.

Die Verbindungseinheit kann ein Verbindungsgelenk oder mehrere Verbindungsgelenke zum Verschwenken der ersten Baueinheit gegenüber der zweiten Baueinheit aufweisen. Das Verbindungsgelenk dient insbesondere zum Verändern der Orientierung der ersten Baueinheit und der zweiten Baueinheit relativ zueinander. Vorzugsweise ist die Verbindungseinheit zum Verschwenken der Baueinheiten relativ zueinander zwischen der ersten Bearbeitungsstellung und der zweiten Bearbeitungsstellung ausgebildet. Das Verbindungsgelenk kann als Drehgelenk, ohne einen Drehanschlag, oder als Schwenkgelenk, mit einem Drehanschlag, ausgebildet sein. Vorzugsweise ist die Gelenkachse bzw. Schwenkachse schräg, insbesondere senkrecht, zu der Drehachse orientiert. Vorteilhaft wird hierdurch erreicht, dass die zweite Baueinheit ihre Orientierung beibehalten kann, auch wenn die Drehachse zwischen einer vertikalen und einer horizontalen Orientierung zur Gleisbearbeitung verlagert wird. Vorzugsweise ist die erste Baueinheit relativ zu der zweiten Baueinheit zwischen der ersten Bearbeitungsstellung und der zweiten Bearbeitungsstellung um mindestens 70°, insbesondere um mindestens 80°, und insbesondere um mindestens 90° verschwenkt. Die zweite Längsabmessung in der zweiten Bearbeitungsstellung ist vorzugsweise höchstens gleich einer Längsabmessung der ersten Baueinheit. Die Gleisbearbeitungsmaschine ist somit besonders einfach und komfortabel bedienbar.

Unter der Längsabmessung der Gleisbearbeitungsmaschine wird die Abmessung der Gleisbearbeitungsmaschine entlang der Drehachse des Bearbeitungskopfs verstanden. Die Längsabmessung wird bearbeitungsseitig ausgehend von dem Bearbeitungskopf bestimmt. Ein mit dem Bearbeitungskopf reversibel verbindbares Bearbeitungswerkzeug ist für die Bestimmung der Längsabmessung der Gleisbearbeitungsmaschine nicht zu berücksichtigen. Die mit der Gleisbearbeitungsmaschine verbundenen Vorteile ergeben sich unabhängig von der Beschaffenheit des damit verbundenen Bearbeitungswerkzeugs.

Die Gleisbearbeitungsmaschine weist den mindestens einen Griff zum manuellen Führen und/oder zum manuellen Tragen der Gleisbearbeitungsmaschine auf. Die Gleisbearbeitungsmaschine kann dazu ausgebildet sein, bei der Gleisbearbeitung zumindest teilweise, insbesondere ausschließlich, von einem Bediener geführt, insbesondere getragen, zu werden. Die Gleisbearbeitungsmaschine kann auch eine Führungseinrichtung zum zumindest teilweisen Führen gegenüber dem zu bearbeitenden Gleis, insbesondere an mindestens einer Schiene des Gleises, aufweisen. Vorzugsweise weist die Gleisbearbeitungsmaschine mindestens einen, insbesondere mindestens zwei, insbesondere mindestens drei, Griffe zum manuellen Führen der Gleisbearbeitungsmaschine auf. Der mindestens eine Griff kann starr und/oder abnehmbar und/oder klappbar und/oder verschiebbar an der Gleisbearbeitungsmaschine, insbesondere an der ersten Baueinheit und/oder an der zweiten Baueinheit, angebracht sein.

Gemäß einem Aspekt der Erfindung ist mindestens ein Griff ein Bestandteil der zweiten Baueinheit, insbesondere also im Hinblick auf die Verbindungseinheit der Bearbeitungsseite gegenüberliegend angeordnet. Der hierdurch vergrößerte Abstand zwischen dem Griff und dem Bearbeitungskopf ist für die Bedienerfreundlichkeit vorteilhaft. Vorzugsweise ist mindestens ein Griff Bestandteil der ersten Baueinheit. Die Gleisbearbeitungsmaschine kann somit, insbesondere in unterschiedlichen Bearbeitungsstellungen, besonders bedienerfreundlich gehandhabt werden.

Der Bearbeitungskopf kann als Bearbeitungswerkzeug und/oder als Werkzeugaufnahme zum Aufnehmen eines Bearbeitungswerkzeugs ausgebildet sein. Zum reversibel lösbaren Verbinden des Bearbeitungskopfs mit dem Bearbeitungswerkzeug kann der Bearbeitungskopf beispielsweise einen Steckschlüssel-Anschluss und/oder einen Schleifscheiben-Anschluss und/oder ein Bohrfutter aufweisen. Vorzugsweise ist der Bearbeitungskopf als Verbindungselement einer Wellenverbindung ausgebildet, insbesondere als Verbindungselement einer Zahnwellenverbindung und/oder einer Nut-Feder-Verbindung und/oder einer Polygonverbindung, insbesondere einer Vierkantverbindung oder einer Sechskantverbindung.

Die Gleisbearbeitungsmaschine kann eine Schleifmaschine, eine Trennmaschine, insbesondere eine Trennschleifmaschine und/oder eine Säge, eine Bohrmaschine und/oder eine Fräsmaschine sein. Vorzugsweise ist die Gleisbearbeitungsmaschine eine Schraubmaschine, insbesondere eine Schlagschraubmaschine, zum Lösen und Anziehen von Schraubverbindungen. Das Bearbeitungswerkzeug kann ein Schleifwerkzeug, ein Trennwerkzeug, ein Bohrwerkzeug, insbesondere ein Gewindebohrwerkzeug, ein Schraubwerkzeug und/oder ein Fräswerkzeug sein. Die Gleisbearbeitungsmaschine ist somit besonders flexibel einsetzbar.

Vorzugsweise ist die Verbindungseinheit auch dazu ausgebildet eine Querabmessung der Gleisbearbeitungsmaschine, senkrecht zu der Drehachse, zu reduzieren. Beispielsweise kann die Verbindungseinheit derart ausgebildet sein, dass die Längsabmessung der Gleisbearbeitungsmaschine bei gleichzeitigem Vergrößern der Querabmessung reduzierbar ist und/oder anders herum.

Die Verbindungseinheit kann ein Arretiermittel zum lösbaren Sperren einer Verlagerungsbewegung bzw. einer Verlagerungsstellung und/oder einer Bearbeitungsstellung der ersten Baueinheit relativ zu der zweiten Baueinheit aufweisen. Das Arretiermittel kann zum reversibel kraftschlüssigen und/oder formschlüssigen Sperren der ersten Baueinheit mit der zweiten Baueinheit ausgebildet sein. Beispielsweise kann das Arretiermittel eine Riegelverbindung und/oder einen Federbolzen aufweisen. Vorteilhaft wird hierdurch erreicht, dass die Gleisbearbeitungsmaschine besonders sicher betreibbar ist.

Die Verbindungseinheit weist vorzugsweise zwei relativ zueinander verlagerbare Verbindungselemente auf. Die erste Baueinheit ist vorzugsweise an dem ersten Verbindungselement und die zweite Baueinheit an dem zweiten Verbindungselement angebracht. Die Verbindungseinheit kann als Linearführung ausgebildet sein. Die Verbindungselemente können zwei linear zueinander verschiebbare Bestandteile der Linearführung sein. Eine derartige Gleisbearbeitungsmaschine ist besonders wirtschaftlich herstellbar und robust im Betrieb.

Vorzugsweise weist die Gleisbearbeitungsmaschine mindestens einen Motor, insbesondere einen fluidischen Motor, insbesondere einen Verbrennungsmotor und/oder einen hydraulischen Motor und/oder einen pneumatischen Motor, und/oder einen Elektromotor zum Drehantreiben des Bearbeitungskopfs auf. Der Bearbeitungskopf ist mittels des Motors vorzugsweise relativ zu dem mindestens einen Griff drehantreibbar.

Gemäß einem weiteren Aspekt der Erfindung ist die Verbindungseinheit dazu ausgebildet, die Verlagerung der ersten Baueinheit relativ zu der zweiten Baueinheit um mindestens 10 %, insbesondere um mindestens 25 %, und insbesondere um mindestens 50 % der Längsabmessung zu ermöglichen. Vorzugsweise ist die Verbindungseinheit dazu ausgebildet, die Verlagerung der ersten Baueinheit relativ zu der zweiten Baueinheit um mindestens 80 mm, insbesondere um mindestens 100 mm, insbesondere um mindestens 250 mm und/oder um maximal 500 mm, insbesondere entlang der Drehachse, zu ermöglichen. Vorzugsweise ist die Verbindungseinheit dazu ausgebildet, die Verlagerung der ersten Baueinheit relativ zu der zweiten Baueinheit um mindestens 25°, insbesondere um mindestens 45°, insbesondere um mindestens 90°, insbesondere um mindestens 120° und/oder um maximal 270° um eine Schwenkachse zu ermöglichen.

Eine Gleisbearbeitungsmaschine nach Anspruch 2 ist besonders flexibel einsetzbar. Vorzugsweise ist die Verbindungseinheit derart ausgebildet, dass die erste Baueinheit und die zweite Baueinheit zwischen mindestens zwei, insbesondere mindestens drei, insbesondere mindestens vier Bearbeitungsstellungen zueinander verlagerbar sind. Die Bearbeitungsstellungen sind dadurch gekennzeichnet, dass in diesen die Gleisbearbeitungsmaschine zur Gleisbearbeitung verwendbar ist. Vorzugsweise ist die Gleisbearbeitungsmaschine in der ersten und der zweiten Bearbeitungsstellung, insbesondere in jeder Bearbeitungsstellung, insbesondere mittels des Arretiermittels, fixierbar. Die Gleisbearbeitungsmaschine ist somit besonders zuverlässig und sicher im Betrieb.

Eine Gleisbearbeitungsmaschine nach Anspruch 3 ist besonders flexibel einsetzbar. Die zweite Längsabmessung ist vorzugsweise um mindestens 25 %, insbesondere um mindestens 30 %, insbesondere um mindestens 40 %, insbesondere um mindestens 50 %, insbesondere um mindestens 60 %, und/oder um maximal 90 % geringer als die erste Längsabmessung. Hierdurch kann die Gleisbearbeitungsmaschine auch in baulich stark beengten Bereichen eines Gleises eingesetzt werden.

Eine Gleisbearbeitungsmaschine nach Anspruch 4 ist besonders wirtschaftlich und bedienerfreundlich im Betrieb. Vorzugsweise ist die Gleisbearbeitungsmaschine manuell und/oder mittels eines Verlagerungsantriebs motorisch angetrieben verlagerbar. Vorzugsweise ist die Verbindungseinheit zum werkzeuglosen Verlagern zwischen der ersten Bearbeitungsstellung und der zweiten Bearbeitungsstellung ausgebildet. Das Arretiermittel kann manuell oder mittels eines Arretierantriebs motorisch angetrieben zwischen einer Verriegelungsstellung und einer Freigabestellung verlagerbar sein.

Eine Gleisbearbeitungsmaschine nach Anspruch 5 ist besonders flexibel einsetzbar. Das Schlagschraubwerk ist vorzugsweise ein Bestandteil der ersten Baueinheit. Das Antriebsmoment kann somit besonders verlustarm und effizient von dem Schlagschraubwerk auf den Bearbeitungskopf übertragen werde. Das Schlagschraubwerk ist vorzugsweise zum Anziehen und Lösen von Schienenschrauben ausgebildet.

Eine Gleisbearbeitungsmaschine nach Anspruch 6 ist besonders flexibel zur Gleisbearbeitung einsetzbar. Vorzugsweise ist die Gleisbearbeitungsmaschine dazu ausgebildet, ein Antriebsmoment an dem Bearbeitungskopf um die Drehachse von mindestens 150 Nm, insbesondere mindestens 250 Nm, insbesondere mindestens 500 Nm, insbesondere mindestens 1000 Nm, und/oder maximal 2500 Nm, insbesondere maximal 1500 Nm, bereitzustellen. Das Antriebsmoment wird vorzugsweise von dem Schlagschraubwerk auf den Bearbeitungskopf übertragen. Die Gleisbearbeitungsmaschine ermöglicht somit das Betätigen, insbesondere festsitzender, Schraubverbindungen an Gleisen.

Eine Gleisbearbeitungsmaschine nach Anspruch 7 ist besonders flexibel einsetzbar. Der Energiespeicher stellt vorzugsweise die Leistung zum Antreiben des Motors bereit. Der Energiespeicher weist vorzugsweise eine Kapazität von mindestens 350 Wh, insbesondere mindestens 500 Wh, insbesondere mindestens 700 Wh, insbesondere mindestens 1 kWh, insbesondere mindestens 5 kWh, und/oder maximal 50 kWh auf. Der Energiespeicher kann einen elektrischen Energiespeicher, einen chemischen Energiespeicher und/oder einen Fluidspeicher, insbesondere einen Brennstofftank, umfassen. Der Energiespeicher ist vorzugsweise Bestandteil der zweiten Baueinheit.

Eine Gleisbearbeitungsmaschine nach Anspruch 8 ist besonders sicher und flexibel handhabbar. Vorzugsweise ist der Akkumulator als Lithium-Polymer-Akkumulator ausgebildet. Die Gleisbearbeitungsmaschine kann eine Akku-Aufnahme zum reversibel lösbaren Anbringen des Akkumulators an der Gleisbearbeitungsmaschine aufweisen. Eine Versorgungsspannung des Akkumulators beträgt vorzugsweise mindestens 18 V, insbesondere mindestens 36 V, insbesondere maximal 130 V.

Der Energiespeicher, insbesondere der Akkumulator, kann einen Griff zum Transport des Akkumulators und/oder zum manuellen Führen der Gleisbearbeitungsmaschine aufweisen.

Eine Gleisbearbeitungsmaschine nach Anspruch 9 weist einen besonders hohen Bedienkomfort auf, insbesondere wenn diese als Schlagschraubmaschine ausgebildet ist. Dadurch, dass der Energiespeicher ein Bestandteil der zweiten Baueinheit ist, kann dieser als Trägheitsdämpfer dienen. Die vergleichsweise hohe Masse des Energiespeichers dämpft Schwingungsbewegungen, also Vibrationsbewegungen, welche von dem Schlagschraubwerk auf die zweite Baueinheit, insbesondere auf den mindestens einen Griff, übertragen werden. Ferner beansprucht der Energiespeicher ein nicht unerhebliches Bauvolumen. Dadurch, dass der Energiespeicher ein Bestandteil der zweiten Baueinheit ist, kann die Längsabmessung der Gleisbearbeitungsmaschine durch das Verlagern zwischen der ersten und der zweiten Bearbeitungsstellung erheblich reduziert werden.

Vorzugsweise ist der Motor mit dem Energiespeicher über flexible, insbesondere elektrische, Leitungen verbunden. Hierdurch wird der Leistungstransport zwischen dem Energiespeicher und dem Motor über die Verbindungseinheit zuverlässig gewährleistet.

Eine Gleisbearbeitungsmaschine nach Anspruch 10 ist besonders flexibel und einfach handhabbar. Die Steuereinheit kann dazu ausgebildet sein, die auf den Bearbeitungskopf, insbesondere über den Motor, übertragene Antriebsleistung, insbesondere stufenlos, zu steuern. Die Steuereinheit kann eine elektronische Schaltung, insbesondere eine programmierbare Steuerungselektronik, zum Steuern der Antriebsleistung aufweisen. Vorzugsweise umfasst die Steuereinheit eine Leistungskomponente zum reversiblen Beschalten des Motors mit der von dem Energiespeicher bereitgestellten, insbesondere elektrischen, Antriebsleistung. Die Steuereinheit ist vorzugsweise ein Bestandteil der zweiten Baueinheit. Die auf die Steuereinheit übertragenen Schwingungen sind hierdurch reduziert.

Eine Gleisbearbeitungsmaschine nach Anspruch **11** ist besonders zuverlässig und robust im Betrieb. Vorzugsweise ist die Steuereinheit dazu ausgebildet, den Betrieb der Gleisbearbeitungsmaschine reversibel zu unterbrechen, wenn sich diese nicht in einer der Bearbeitungsstellungen befindet und/oder wenn diese nicht in einer der Bearbeitungsstellungen verriegelt ist. Die Steuereinheit kann hierzu mit einem Sensor in Signalverbindung stehen, welcher die Anordnung der Gleisbaumaschine in der mindestens einen Bearbeitungsstellung und/oder den Verriegelungszustand in der mindestens einen Bearbeitungsstellung erfasst. Die Steuereinheit kann dazu ausgebildet sein, die Zufuhr der Antriebsleistung zu dem Bearbeitungskopf, insbesondere von elektrischer Leistung zu dem Motor, reversibel zu unterbrechen.

Eine Gleisbearbeitungsmaschine nach Anspruch 12 weist einen hohen Bedienkomfort auf und ist besonders robust im Betrieb. Der Schwingungsentkoppler ist, insbesondere entlang eines Schwingungspfads, vorzugsweise zwischen dem Bearbeitungskopf und der Verbindungseinheit, insbesondere zwischen dem Motor und der Verbindungseinheit, angeordnet. Die Verbindungseinheit wird somit weniger intensiv durch Schwingungen belastet. Der Schwingungsentkoppler weist vorzugsweise mindestens ein Dämpfungselement, insbesondere aus einem gummi-elastischen Material, auf. Vorzugsweise ist der Motor mittels der Dämpfungselemente, insbesondere unter Verwendung von Schraubbolzen, an der Verbindungseinheit angebracht. Der Schwingungsentkoppler ist ein Bestandteil der ersten Baueinheit. Alternativ kann der Schwingungsentkoppler ein Bestandteil der zweiten Baueinheit sein.

Eine weitere Aufgabe der Erfindung besteht darin, ein Verfahren zur einfachen und flexiblen Gleisbearbeitung mittels einer Gleisbearbeitungsmaschine zu schaffen.

Diese Aufgabe wird durch ein Verfahren mit den Merkmalen des Anspruchs 13 gelöst. Die Vorteile des Verfahrens entsprechen den Vorteilen der vorstehend beschriebenen Gleisbearbeitungsmaschine. Vorzugsweise ist das Verfahren mit mindestens einem der Merkmale weitergebildet, welche vorstehend im Zusammenhang mit der Gleisbearbeitungsmaschine beschrieben sind. Dadurch, dass die Gleisbearbeitungsmaschine zum Bearbeiten eines Gleises verwendet wird, kann die Gleisbearbeitung sowohl in Bereichen mit ausreichendem Bearbeitungsraum als auch in Engstellen, wie beispielsweise in Weichen oder auf Brücken, erfolgen, an denen nur wenig Raum zur Gleisbearbeitung zur Verfügung steht. Auf die Anschaffung, Instandhaltung und den Betrieb unterschiedlicher Gleisbearbeitungsmaschinen kann somit verzichtet werden. Die Gleisbearbeitungsmaschine gewährleistet das Bearbeiten des Gleises in besonders wirtschaftlicher Weise.

Vorzugsweise ist die Gleisbearbeitungsmaschine als Schlagschraubmaschine zum Anziehen und Lösen von Schraubverbindungen, insbesondere von Gleisschraubverbindungen zur Schienenbefestigung an Gleisschwellen, ausgebildet. Derartige Gleisbearbeitungsmaschinen sind üblicherweise besonders bauraumintensiv und profitieren damit besonders stark von einer Reduktion der Längsabmessung.

Weitere Merkmale, Einzelheiten und Vorteile der Erfindung ergeben sich aus der nachfolgenden Beschreibung eines Ausführungsbeispiels anhand der Figuren. Es zeigen:
- Fig. 1: eine perspektivische Darstellung einer Gleisbearbeitungsmaschine, insbesondere einer Schlagschraubmaschine, bei der Gleisbearbeitung, mit einer ersten Baueinheit, einer zweiten Baueinheit und einer Verbindungseinheit zum mechanischen Verbinden der ersten Baueinheit mit der zweiten Baueinheit, wobei die Gleisbearbeitungsmaschine in einer ersten Bearbeitungsstellung angeordnet ist,
- Fig. 2: eine vergrößerte Darstellung der Gleisbearbeitungsmaschine in Fig. 1,
- Fig. 3: eine Seitenansicht der Gleisbearbeitungsmaschine in Fig. 1, wobei an einem Bearbeitungskopf der ersten Baueinheit ein Steckschlüssel angebracht ist, und wobei die Gleisbearbeitungsmaschine zum Lösen einer Schraubverbindung mit vertikal orientierter Schraubenachse verwendet wird,
- Fig. 4: eine Vorderansicht der Gleisbearbeitungsmaschine in Fig. 1 ohne den Steckschlüssel,
- Fig. 5: eine perspektivische Darstellung der Gleisbearbeitungsmaschine in Fig. **1****,** wobei die Gleisbearbeitungsmaschine in einer zweiten Bearbeitungsstellung angeordnet ist, in welcher die zweite Baueinheit mittels der Verbindungseinheit um die erste Baueinheit geschwenkt ist,
- Fig. 6: eine perspektivische Darstellung der Gleisbearbeitungsmaschine in Fig. 5, und
- Fig. 7: eine Seitenansicht der Gleisbearbeitungsmaschine in Fig. 5, insbesondere beim Lösen einer Schraubverbindung mit horizontal orientierter Schraubenachse.

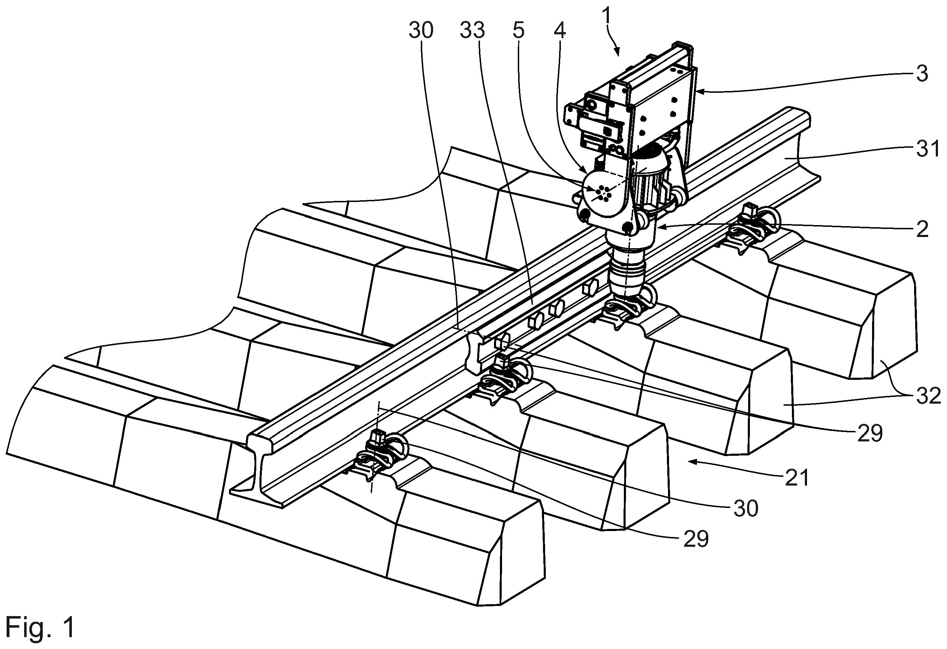

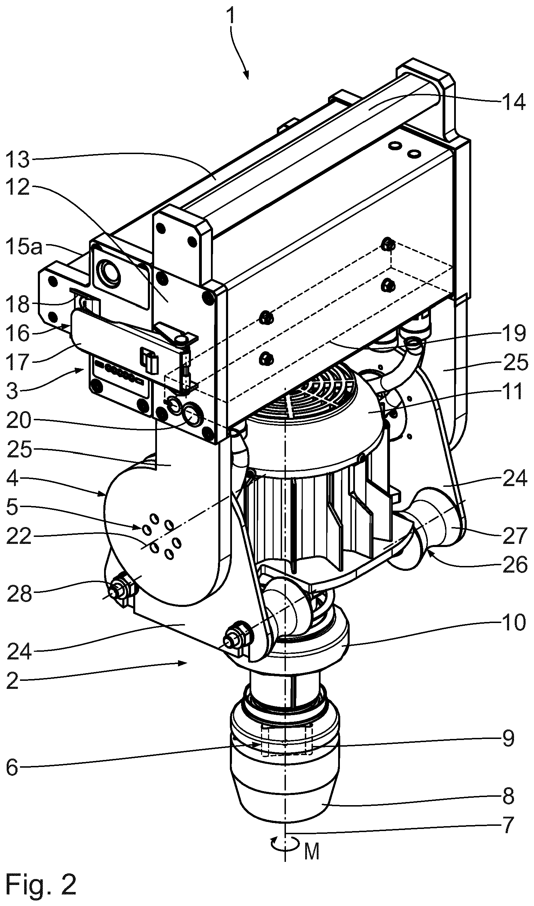

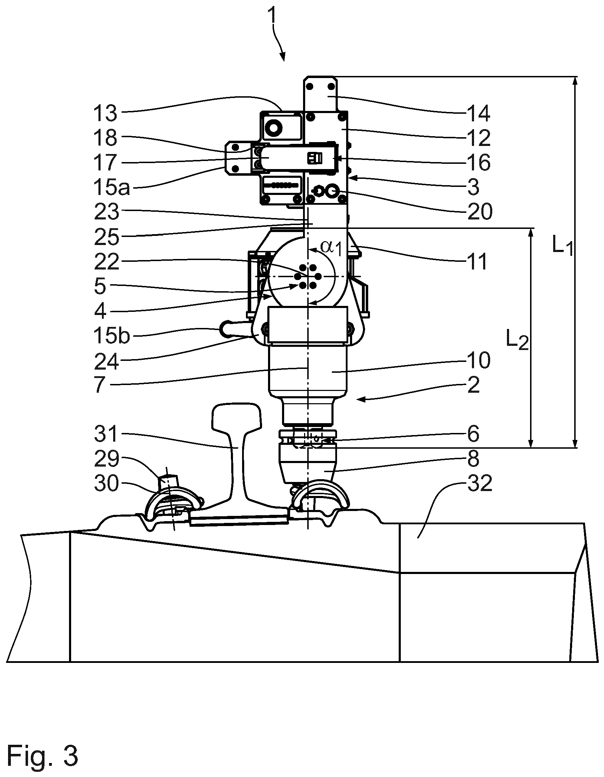

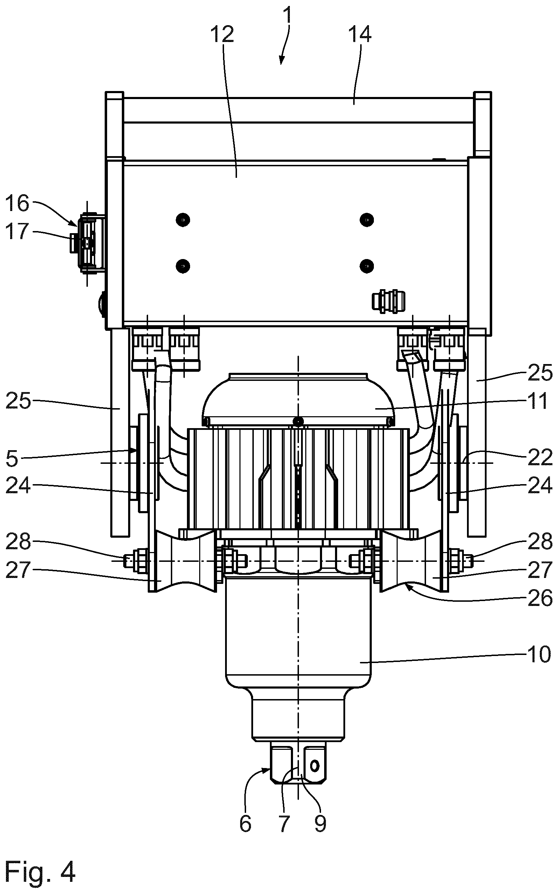

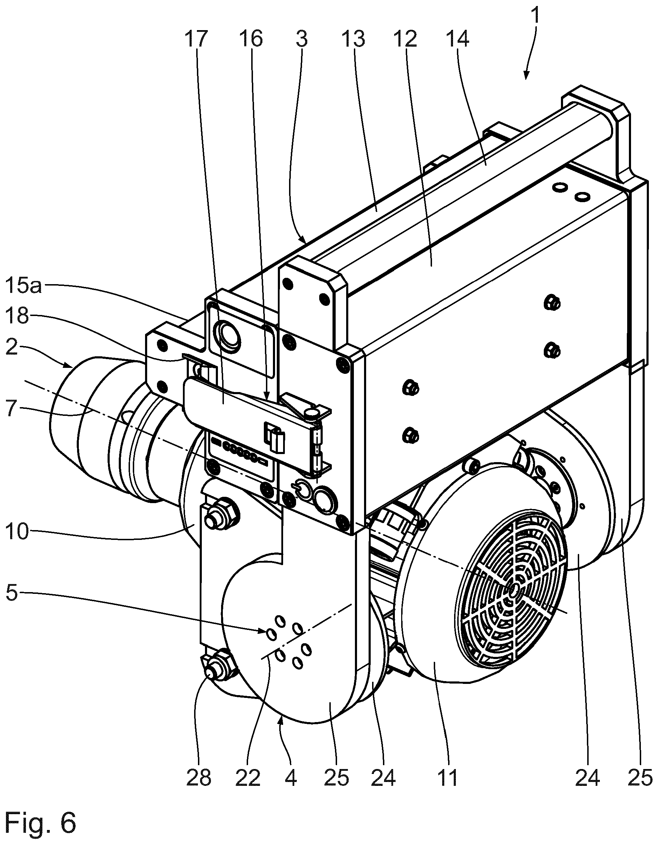

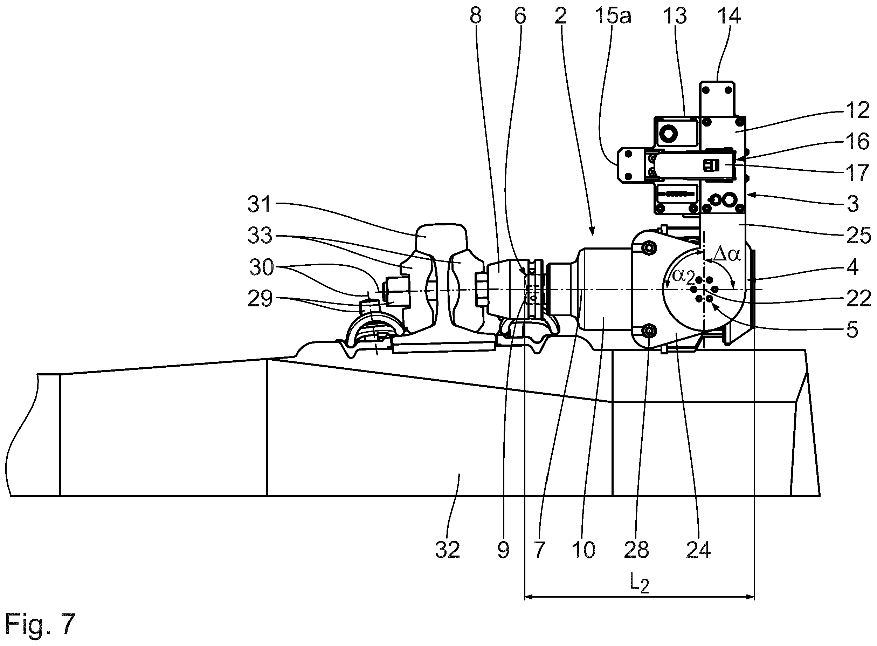

Anhand der Fig. 1 bis Fig. 7 ist eine Gleisbearbeitungsmaschine **1,** insbesondere eine Schlagschraubmaschine zur Gleisbearbeitung, beschrieben. Die Gleisbearbeitungsmaschine 1 umfasst eine erste Baueinheit 2 und eine zweite Baueinheit 3. Die erste Baueinheit 2 und die zweite Baueinheit 3 sind mittels einer Verbindungseinheit 4 mechanisch miteinander verbunden. Die Verbindungseinheit 4 weist ein Verbindungsgelenk 5 zum Schwenken der zweiten Baueinheit 3 relativ zu der ersten Baueinheit 2 auf.

Die erste Baueinheit 2 weist einen Bearbeitungskopf 6 auf, welcher um eine Drehachse 7 drehantreibbar ist. Zum Drehantreiben eines Bearbeitungswerkzeugs 8 weist der Bearbeitungskopf 6 einen Werkzeuganschluss 9 in Form einer Außenvierkant-Verbindung auf. An dem Werkzeuganschluss 9 ist ein als Steckschlüssel ausgebildetes Bearbeitungswerkzeug 8 reversibel lösbar angebracht.

Der Bearbeitungskopf 6 ist ein Bestandteil eines Schlagschraubwerks 10 der Gleisbearbeitungsmaschine 1. Das Schlagschraubwerk 10 ist mit einem Elektromotor 11 der Gleisbearbeitungsmaschine 1 drehantreibbar verbunden. Die erste Baueinheit 2 umfasst den Elektromotor 11 und das Schlagschraubwerk 10 mit dem Bearbeitungskopf 6.

Die Gleisbearbeitungsmaschine 1 weist eine Akku-Aufnahme 12 auf. An der Akku-Aufnahme 12 ist ein Akkumulator 13 reversibel lösbar angebracht. Der Akkumulator 13 ist als Lithium-Polymer-Akkumulator ausgebildet. Insbesondere ist der Akkumulator 13 zum Versorgen des Elektromotors 11 mit elektrischer Leistung ausgebildet.

Die Gleisbearbeitungsmaschine 1 ist tragbar ausgebildet und zur Gleisbearbeitung manuell führbar. Hierzu weist die Gleisbearbeitungsmaschine 1 einen ersten Griff 14, einen zweiten Griff 15a und einen dritten Griff 15b auf. Der erste Griff 14 ist fest mit der Akku-Aufnahme 12 verbunden. Der zweite Griff 15a ist an dem Akkumulator 13 angebracht. Der dritte Griff 15b ist an der Verbindungseinheit 4 klappbar angebracht. Der dritte Griff 15b ist ein Bestandteil der ersten Baueinheit 2.

Der Akkumulator 13 ist an der Akku-Aufnahme 12 mittels einer Rastverbindung 16 angebracht. Die Rastverbindung 16 umfasst einen schwenkbar gelagerten Rasthebel 17 und einen Rasteingriff 18. Der Rasthebel 17 ist mit der Akku-Aufnahme 12 verbunden und mittels eines nicht dargestellten Federelements in eine Rastposition, in welcher die Rastverbindung 16 geschlossen ist, vorgespannt. In einer Offenposition des Rasthebels 17 ist der Akkumulator 13 von der Akku-Aufnahme 12 abnehmbar.

Eine Steuereinheit 19 der Gleisbearbeitungsmaschine 1 ist über die Akku-Aufnahme 12 signalübertragend, insbesondere leistungsübertragend, mit dem Akkumulator 13 verbunden. Die Steuereinheit 19 ist dazu ausgebildet, die von dem Akkumulator 13 bereitgestellte und dem Elektromotor 11 zugeführte elektrische Leistung zu steuern. Hierzu umfasst die Steuereinheit 19 ein nicht dargestelltes elektronisches Steuerelement, insbesondere eine programmierbare Steuerung, und eine nicht dargestellte, mit dem elektronischen Steuerelement in Signalverbindung stehende Leistungskomponente zum Schalten der dem Elektromotor 11 zugeführten elektrischen Leistung.

Eine Bedieneinheit 20 der Gleisbearbeitungsmaschine 1 ist dazu ausgebildet, die Gleisbearbeitungsmaschine 1 aufgrund einer entsprechenden Eingabe des Bedieners zu aktivieren. Die Steuereinheit 19 und die Bedieneinheit 20 sind dazu ausgebildet, die auf den Elektromotor 11 übertragene Leistung in Abhängigkeit von einer Bedieneingabe zu steuern, insbesondere zu regeln. Die Bedieneinheit 20 steht hierzu mit der Steuereinheit 19 in Signalverbindung.

Die zweite Baueinheit 3 weist den ersten Griff 14, die Akku-Aufnahme 12, den Akkumulator 13 mit dem zweiten Griff 15a, die Steuereinheit 19 und die Bedieneinheit 20 auf.

Die Verbindungseinheit 4 verbindet die erste Baueinheit 2 mit der zweiten Baueinheit 3 derart, dass diese relativ zueinander zwischen einer ersten Bearbeitungsstellung und einer zweiten Bearbeitungsstellung verlagerbar, insbesondere verschwenkbar, sind. In beiden Bearbeitungsstellungen kann die Gleisbearbeitungsmaschine 1 zum Bearbeiten eines Gleises 21 verwendet werden. Das Verbindungsgelenk 5 ist derart ausgebildet, dass die erste Baueinheit 2 und die zweite Baueinheit 3 in zwei vorbestimmten Verbindungswinkeln α₁, α₂ zueinander orientiert fixierbar sind. Die Verbindungswinkel α₁, α₂ bemessen sich um eine Schwenkachse 22 des Verbindungsgelenks 5, zwischen der Drehachse 7 und einer radial zu der Schwenkachse 22 orientierten Haupterstreckungsrichtung 23 der zweiten Baueinheit 3. Der erste Verbindungswinkel α₁ liegt in der ersten Bearbeitungsstellung vor und beträgt 180°. Der zweite Verbindungswinkel α₂, der in der zweiten Bearbeitungsstellung vorliegt, beträgt 90°.

Ein Schwenkwinkel Δα, um den die erste Baueinheit 2 relativ zu der zweiten Baueinheit 3 beim Verlagern zwischen der ersten Bearbeitungsstellung und der zweiten Bearbeitungsstellung verschwenkbar ist, beträgt 90°.

Das Verbindungsgelenk 5 weist erste Gelenkteile 24 und zweite Gelenkteile 25 auf, wobei das jeweilige erste Gelenkteil 24 relativ zu dem jeweiligen zweiten Gelenkteil 25 verschwenkbar ist. Die ersten Gelenkteile 24 und die zweiten Gelenkteile 25 sind Bestandteile der Verbindungseinheit 4. Die Verbindungseinheit 4 ist mittels der ersten Gelenkteile 24 an zwei Seiten mit der ersten Baueinheit 2 verbunden. Mittels der zweiten Gelenkteile 25 ist die Verbindungseinheit 4 an zwei Seiten mit der Akku-Aufnahme 12 verbunden.

Die Verbindungseinheit 4 weist eine nicht dargestellte Schwenkarretierung zum reversibel lösbaren Fixieren der Gleisbearbeitungsmaschine 1 in der ersten Bearbeitungsstellung oder in der zweiten Bearbeitungsstellung, insbesondere in jedem der vorbestimmten Verbindungswinkel α₁, α₂, auf.

Hierzu umfasst die Schwenkarretierung einen Federbolzen, welcher insbesondere zwischen einem der ersten Gelenkteile 24 und dem zugehörigen zweiten Gelenkteil 25 wirkt. Die Schwenkarretierung ist von einem Bediener zum Verlagern der Gleisbearbeitungsmaschine 1 zwischen der ersten und der zweiten Bearbeitungsstellung manuell zwischen einer Verriegelungsstellung und einer Freigabestellung verlagerbar.

Die Steuereinheit 19 ist dazu ausgebildet, zu erfassen, ob die Verbindungseinheit 4, insbesondere die Schwenkarretierung, in der Verriegelungsstellung angeordnet ist. Eine Aktivierung des Elektromotors **11** wird mittels der Steuereinheit 19 nur dann freigeschalten, wenn die Verbindungseinheit 4 in der Verriegelungsstellung angeordnet ist. Hierzu kann die Steuereinheit 19 mit einem mit der Schwenkarretierung verbundenen Schalter in Signalverbindung stehen.

Zwischen dem Bearbeitungskopf 6 und den Griffen 14, 15a, 15b wirkt ein Schwingungsentkoppler 26. Über den Schwingungsentkoppler 26 ist die erste Baueinheit 2 mit der Verbindungseinheit 4, insbesondere mit den ersten Gelenkteilen 24, verbunden. Der Elektromotor **11** ist mittels des Schwingungsentkopplers 26 an den ersten Gelenkteilen 24 angebracht. Der Schwingungsentkoppler 26 umfasst vier Dämpfungselemente 27 zum Dämpfen von Schwingungsbewegungen zwischen der ersten Baueinheit 2 und der Verbindungseinheit 4. Die Dämpfungselemente 27 sind als gummi-elastische Körper, insbesondere mit einer rotationssymmetrischen, insbesondere sanduhrförmigen, Form ausgebildet. Je ein Schraubbolzen 28 befestigt jeweils ein Dämpfungselement 27 zwischen der ersten Baueinheit 2 und der Verbindungseinheit 4 und begrenzt deren Schwingungsbewegung zueinander. Der Schwingungsentkoppler 26 reduziert die Übertragung von an dem Schlagschraubwerk 10 erzeugten Vibrationen auf die Verbindungseinheit 4 und über die Griffe 14, 15a, 15b auf den Bediener.

Die Gleisbearbeitungsmaschine 1 weist entlang der Drehachse 7 in der ersten Bearbeitungsstellung eine erste Längsabmessung L₁ und in der zweiten Bearbeitungsstellung eine zweite Längsabmessung L₂ auf. Die Längsabmessungen L₁, L₂ bemessen sich ausgehend von dem Bearbeitungskopf 6, insbesondere dem Werkzeuganschluss 9, entlang der Drehachse 7. Das Bearbeitungswerkzeug 8 wird bei der Bemessung der Längsabmessungen L₁, L₂ nicht berücksichtigt. Die zweite Längsabmessung L₂ ist beispielsweise um ca. 37 % geringer als die erste Längsabmessung L₁.

Die Gleisbearbeitungsmaschine 1 ist dazu ausgebildet, insbesondere sind der Elektromotor 11 und das Schlagschraubwerk 10 dazu ausgebildet, an dem Bearbeitungskopf 6, insbesondere an dem Bearbeitungswerkzeug 8, ein Antriebsmoment M um die Drehachse 7 von 500 Nm bereitzustellen.

Die Funktionsweise der Gleisbearbeitungsmaschine 1 ist wie folgt:
Die Gleisbearbeitungsmaschine 1 ist zunächst deaktiviert. Der Akkumulator 13 ist geladen und an der Akku-Aufnahme 12 angebracht. Das Bearbeitungswerkzeug 8 ist an dem Werkzeuganschluss 9 angebracht. Die Bearbeitungsmaschine 1 befindet sich in der ersten Bearbeitungsstellung, in welcher die Drehachse 7 im Wesentlichen parallel zu der Haupterstreckungsrichtung 23 der zweiten Baueinheit 3 orientiert ist.

Die Bearbeitungsmaschine 1 kann zum Anziehen und/oder zum Lösen unterschiedlicher Gleisschraubverbindungen 29 verwendet werden. Gleisschraubverbindungen 29 mit vertikaler Schraubenachse 30 werden beispielsweise zum Befestigen von Schienen 31 an Gleisschwellen 32 verwendet. Gleisschraubverbindungen 29 mit horizontaler Schraubenachse 30 kommen beispielsweise an Notlaschenverbindern 33 zum Einsatz.

In den Fig. 1 bis Fig. 4 ist die Gleisbearbeitungsmaschine 1 in der ersten Bearbeitungsstellung dargestellt. Zum Betätigen der Gleisschraubverbindungen 29 mit der vertikalen Schraubenachse 30 ist die Bearbeitungsmaschine 1 in der ersten Bearbeitungsstellung angeordnet. Die Gleisbearbeitungsmaschine 1 ist aufgrund ihrer großen Längsabmessung L₁ in vertikaler Richtung vom Bediener in einfacher Weise greifbar und führbar und aufgrund der geringen Querabmessungen in horizontaler Richtung hierbei besonders bauraumsparend einsetzbar.

Mittels der Bedieneinheit 20 wird ein Bedienerbefehl an die Steuereinheit 19 zum Aktivieren der Gleisbearbeitungsmaschine 1 übertragen. Anhand eines weiteren, über die Bedieneinheit 20 erfassten Bedienerbefehls stellt die Steuereinheit 19 die an dem Elektromotor **11** bereitgestellte elektrische Leistung ein. Die elektrische Leistung wird mittels der Steuereinheit 19 von dem Akkumulator 13 über die Leistungskomponente auf den Elektromotor aufgeschaltet. Entsprechend der von dem Bediener vorgegebenen Drehrichtung um die Drehachse 7 wird die Gleisschraubverbindung 29 entweder festgezogen oder gelöst.

Zum Betätigen der Gleisschraubverbindungen 29 des Notlaschenverbinders 33 mit der jeweils horizontalen Schraubenachse 30 wird die Gleisbearbeitungsmaschine 1 aus der ersten Bearbeitungsstellung in die zweite Bearbeitungsstellung verlagert. Hierzu wird die Schwenkarretierung manuell von dem Bediener gelöst, insbesondere wird der Federbolzen aus einer Verriegelungsstellung in eine Freigabestellung verlagert. Die zweite Baueinheit 3 kann relativ zu der ersten Baueinheit 2 manuell um den Schwenkwinkel Δα von 90° geschwenkt werden. Die Anordnung der Schwenkarretierung in der Freigabestellung wird von der Steuereinheit 19 erfasst. Der Betrieb der Gleisbearbeitungsmaschine **1,** insbesondere eine Leistungsübertragung zwischen dem Akkumulator 13 und dem Elektromotor **11,** wird von der Steuereinheit 19 unterbunden.

In der zweiten Bearbeitungsstellung gelangt die Schwenkarretierung wieder in die Verriegelungsstellung, insbesondere rastet der Federbolzen in eine entsprechende Bohrung zum Fixieren der Verbindungseinheit 4 in der zweiten Bearbeitungsstellung ein. Die Steuereinheit 19 erfasst die Anordnung der Schwenkarretierung in der Verriegelungsstellung und erlaubt das Aktivieren der Gleisbearbeitungsmaschine 1.

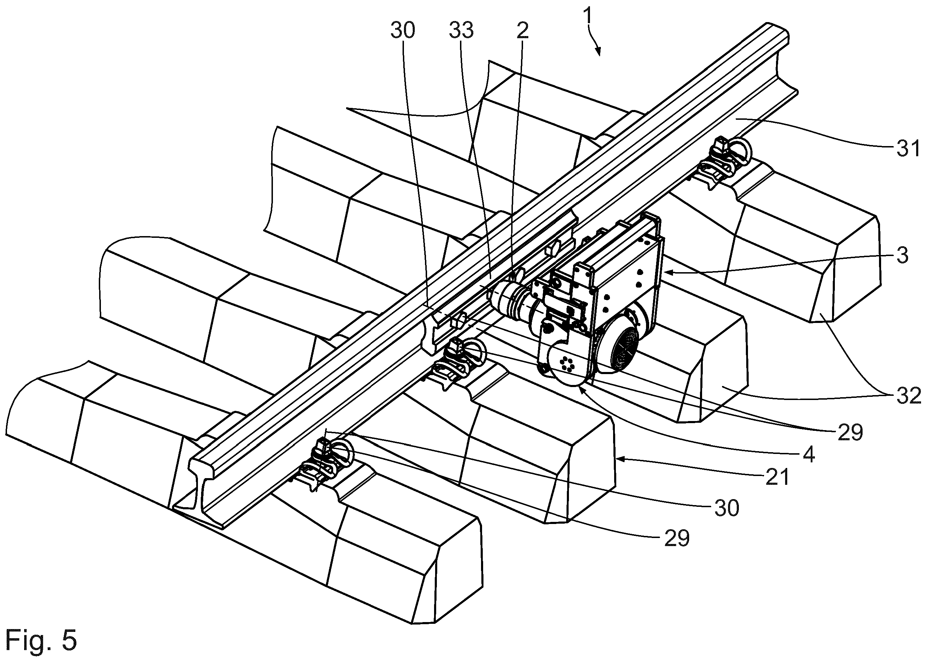

In den Fig. 5 bis Fig. 7 ist die Gleisbearbeitungsmaschine 1 in der zweiten Bearbeitungsstellung dargestellt. Die Gleisbearbeitungsmaschine 1 beziehungsweise das Bearbeitungswerkzeug 8 kann von dem Bediener mittels der Griffe 14, 15a, 15b an eine der Gleisschraubverbindungen 29 mit der horizontalen Schraubenachse 30 herangeführt und mit dieser in Eingriff gebracht werden. Durch die reduzierte Längsabmessung L₂ ist der Bauraumbedarf der Gleisbearbeitungsmaschine 1 in horizontaler Richtung besonders gering. Dadurch, dass die zweite Baueinheit 3 mit den Griffen 14, 15a um die Schwenkachse 22 nach oben geschwenkt ist, behält diese ihre Orientierung zur Vertikalachse bei und die Gleisbearbeitungsmaschine 1 ist besonders einfach handhabbar.

Die Funktionsweise der Gleisbearbeitungsmaschine 1 in der zweiten Bearbeitungsstellung entspricht der Funktionsweise der Bearbeitungsmaschine 1 in der ersten Bearbeitungsstellung.

Die Anordnung des Schwingungsentkopplers 26 zwischen dem Bearbeitungskopf 6 und den Griffen 14, 15a, 15b, gewährleistet, dass die Intensität der auf den Bediener wirkenden Schwingungen reduziert ist. Dadurch, dass der Schwingungsentkoppler 26 zwischen der ersten Baueinheit 2 und der Verbindungseinheit 4 angeordnet ist, ist auch die Schwingungsbeanspruchung der Verbindungseinheit 4 gesenkt. Ferner ist die Beanspruchung empfindlicher elektronischer Komponenten wie beispielsweise des Akkumulators 13 und der Steuereinheit 19, die Bestandteil der zweiten Baueinheit 3 sind, reduziert.

Durch die Anordnung des gesamten Antriebsstrangs, insbesondere des Elektromotors **11** und des Schlagschraubwerks 10, auf der Schwingungsseite des Schwingungsentkopplers 26, kann auf eine konstruktiv aufwändige und verschleißanfällige Schwingungsentkopplung über eine Antriebswelle hinweg verzichtet werden. Die Anordnung des masseintensiven Ackumulators 13 auf der Bedienerseite des Schwingungsentkopplers 26, bewirkt eine zusätzliche Schwingungsdämpfung aufgrund der Massenträgheit.

Dadurch, dass zum Drehantreiben des Bearbeitungskopfs 6 das Schlagschraubwerk 10 vorgesehen ist, sind die von dem Bediener zu tragenden Gehäusemomente deutlich reduziert. Die Gleisbearbeitungsmaschine 1 ist besonders bedienerfreundlich in der Benutzung.

Die Gleisbearbeitungsmaschine 1 kann in unterschiedlichen Anwendungsfällen besonders platzsparend zur Gleisbearbeitung verwendet werden. Die Gleisbearbeitungsmaschine 1 ist somit besonders flexibel einsetzbar und weist einen vergrößerten Anwendungsbereich auf.

## Patentansprüche

1. Gleisbearbeitungsmaschine (1), insbesondere Schlagschraubmaschine, zur Gleisbearbeitung, aufweisend
- mindestens einen Griff (14, 15a, 15b) zum manuellen Führen der Gleisbearbeitungsmaschine (1),
- eine erste Baueinheit (2) mit einem Bearbeitungskopf (6), der zur Gleisbearbeitung um eine Drehachse (7) drehantreibbar ist, wobei die erste Baueinheit (2) einen Motor (11) zum Drehantreiben des Bearbeitungskopfs (6) aufweist,
- eine zweite Baueinheit (3), und
- eine Verbindungseinheit (4) zum mechanischen Verbinden der ersten Baueinheit (2) mit der zweiten Baueinheit (3) und zum Reduzieren einer Längsabmessung (L₁, L₂) der Gleisbearbeitungsmaschine (1) entlang der Drehachse (7),
**dadurch gekennzeichnet,**
**dass** die Verbindungseinheit (4) ein Verbindungsgelenk (5) zum Schwenken der ersten Baueinheit (2) relativ zu der zweiten Baueinheit (3) aufweist.

2. Gleisbearbeitungsmaschine (1) nach Anspruch 1, **dadurch gekennzeichnet, dass** die Verbindungseinheit (4) die erste Baueinheit (2) mit der zweiten Baueinheit (3) derart verbindet, dass diese relativ zueinander verlagerbar sind zwischen einer ersten Bearbeitungsstellung und einer zweiten Bearbeitungsstellung.

3. Gleisbearbeitungsmaschine (1) nach Anspruch 1 oder 2, **dadurch gekennzeichnet, dass** diese entlang der Drehachse (7) in einer ersten Bearbeitungsstellung eine erste Längsabmessung (L₁) und in einer zweiten Bearbeitungsstellung eine zweite Längsabmessung (L₂) aufweist, wobei die zweite Längsabmessung (L₂) um mindestens 25 % geringer als die erste Längsabmessung (L₁) ist.

4. Gleisbearbeitungsmaschine (1) nach einem der vorstehenden Ansprüche, **dadurch gekennzeichnet, dass** die Verbindungseinheit (4) zum werkzeuglosen Verlagern der ersten Baueinheit (2) relativ zu der zweiten Baueinheit (3) ausgebildet ist.

5. Gleisbearbeitungsmaschine (1) nach einem der vorstehenden Ansprüche, **gekennzeichnet durch** ein Schlagschraubwerk (10) zum Drehantreiben des Bearbeitungskopfs (6) um die Drehachse (7).

6. Gleisbearbeitungsmaschine (1) nach einem der vorstehenden Ansprüche, **gekennzeichnet durch** ein Antriebsmoment (M) an dem Bearbeitungskopf (6) um die Drehachse (7) von mindestens 150 Nm.

7. Gleisbearbeitungsmaschine (1) nach einem der vorstehenden Ansprüche, **gekennzeichnet durch** einen Energiespeicher (13) zum Bereitstellen einer auf den Bearbeitungskopf (6) übertragenen Antriebsleistung.

8. Gleisbearbeitungsmaschine (1) nach Anspruch 7, **dadurch gekennzeichnet, dass** der Energiespeicher einen Akkumulator (13) umfasst.

9. Gleisbearbeitungsmaschine (1) nach Anspruch 7 oder 8, **dadurch gekennzeichnet, dass** die zweite Baueinheit (3) den Energiespeicher (13) umfasst.

10. Gleisbearbeitungsmaschine (1) nach einem der vorstehenden Ansprüche, **gekennzeichnet durch** eine Steuereinheit (19) zum Steuern einer auf den Bearbeitungskopf (6) übertragenen Antriebsleistung.

11. Gleisbearbeitungsmaschine (1) nach Anspruch 10, **dadurch gekennzeichnet, dass** die Steuereinheit (19) dazu ausgebildet ist, eine Anordnung der Gleisbearbeitungsmaschine (1) in mindestens einer Bearbeitungsstellung zu erfassen.

12. Gleisbearbeitungsmaschine (1) nach einem der vorstehenden Ansprüche, **gekennzeichnet durch** einen zwischen dem Bearbeitungskopf (6) und dem mindestens einen Griff (14, 15a, 15b) wirkenden Schwingungsentkoppler (26).

13. Verfahren zur Gleisbearbeitung mittels einer Gleisbearbeitungsmaschine (1) nach einem der Ansprüche 1 bis 12.

## Claims

1. Track processing machine (1), in particular impact wrench machine, for track processing, comprising
- at least one handle (14, 15a, 15b) for manually guiding the track processing machine (1),
- a first structural unit (2) with a processing head (6) which is drivable in rotation about an axis of rotation (7) for track processing, the first structural unit (2) having a motor (11) for rotatably driving the processing head (6),
- a second structural unit (3), and
- a linking unit (4) for mechanically connecting the first structural unit (2) to the second structural unit (3) and for reducing a longitudinal dimension (L₁, L₂) of the track processing machine (1) along the axis of rotation (7),
**characterized in**
**that** the linking unit (4) has a linking joint (5) for pivoting the first structural unit (2) relative to the second structural unit (3).

2. Track processing machine (1) according to claim 1, **characterized in that** the linking unit (4) connects the first structural unit (2) with the second structural unit (3) such that these are displaceable relative to each other between a first processing position and a second processing position.

3. Track processing machine (1) according to claim 1 or 2, **characterized in that** the latter has a first longitudinal dimension (L₁) along the axis of rotation (7) in a first processing position and a second longitudinal dimension (L₂) in a second processing position, wherein the second longitudinal dimension (L₂) is smaller than the first longitudinal dimension (L₁) by at least 25%.

4. Track processing machine (1) according to any one of the preceding claims, **characterized in that** the linking unit (4) is construed for tool-free displacement of the first structural unit (2) relative to the second structural unit (3).

5. Track processing machine (1) according to any one of the preceding claims, **characterized by** an impact wrench (10) for driving the processing head (6) in rotation about the axis of rotation (7).

6. Track processing machine (1) according to any one of the preceding claims, **characterized by** a drive torque (M) of at least 150 Nm is provided on the processing head (6) about the axis of rotation (7).

7. Track processing machine (1) according to any one of the preceding claims, **characterized by** an energy storage device (13) for providing a drive power transmitted to the processing head (6).

8. Track processing machine (1) according to claim 7, **characterized in that** the energy storage device comprises an accumulator (13).

9. Track processing machine (1) according to claim 7 or 8, **characterized in that** the second structural unit (3) comprises the energy storage device (13).

10. Track processing machine (1) according to any one of the preceding claims, **characterized by** a control unit (19) to control a drive power transmitted to the processing head (6).

11. Track processing machine (1) according to claim 12, **characterized in that** the control unit (19) is construed to detect an arrangement of the track processing machine (1) in at least one processing position.

12. Track processing machine (1) according to any one of the preceding claims, **characterized by** a vibration decoupler (26) acting between the processing head (6) and the at least one handle (14, 15a, 15b).

13. Method for track processing by means of a track processing machine (1) according to any one of claims 1 to 12.

## Revendications

1. Machine de traitement des voies ferrées (1), en particulier machine à visser à percussion, pour le traitement des voies ferrées, présentant
- au moins une poignée (14, 15a, 15b) pour guider manuellement la machine de traitement des voies ferrées (1),
- une première unité de construction (2) avec une tête de traitement (6) qui peut être entraînée en rotation autour d'un axe de rotation (7) pour le traitement des voies ferrées, la première unité de construction (2) présentant un moteur (11) pour entraîner en rotation la tête de traitement (6).
- une deuxième unité de construction (3), et
- une unité de liaison (4) pour relier mécaniquement la première unité de construction (2) à la deuxième unité de construction (3) et pour réduire une dimension longitudinale (L₁, L₂) de la machine de traitement des voies ferrées (1) le long de l'axe de rotation (7),
**caractérisée en ce**
**que** l'unité de liaison (4) présente une articulation de liaison (5) pour faire pivoter la première unité de construction (2) par rapport à la deuxième unité de construction (3).

2. Machine de traitement des voies ferrées (1) selon la revendication 1, **caractérisée en ce que** l'unité de liaison (4) relie la première unité de construction (2) à la deuxième unité de construction (3) de telle sorte qu'elles puissent être déplacées l'une par rapport à l'autre entre une première position de traitement et une deuxième position de traitement.

3. Machine de traitement des voies ferrées (1) selon la revendication 1 ou 2, **caractérisée en ce qu'**elle présente le long de l'axe de rotation (7) une première dimension longitudinale (L₁) dans une première position de traitement et une deuxième dimension longitudinale (L₂) dans une deuxième position de traitement, la deuxième dimension longitudinale (L₂) étant inférieure d'au moins 25 % à la première dimension longitudinale (L₁).

4. Machine de traitement des voies ferrées (1) selon l'une quelconque des revendications précédentes, **caractérisée en ce que** l'unité de liaison (4) est conçue pour déplacer sans outil la première unité de construction (2) par rapport à la deuxième unité de construction (3).

5. Machine de traitement des voies ferrées (1) selon l'une quelconque des revendications précédentes, **caractérisée par** un mécanisme à vis à percussion (10) pour entraîner en rotation la tête de traitement (6) autour de l'axe de rotation (7).

6. Machine de traitement des voies ferrées (1) selon l'une quelconque des revendications précédentes, **caractérisée par** un couple d'entraînement (M) d'au moins 150 Nm sur la tête de traitement (6) autour de l'axe de rotation (7).

7. Machine de traitement des voies ferrées (1) selon l'une quelconque des revendications précédentes, **caractérisée par** un accumulateur d'énergie (13) pour fournir une puissance d'entraînement transmise à la tête de traitement (6).

8. Machine de traitement des voies ferrées (1) selon la revendication 7, **caractérisée en ce que** l'accumulateur d'énergie comprend une batterie (13).

9. Machine de traitement des voies ferrées (1) selon la revendication 7 ou 8, **caractérisée en ce que** la deuxième unité de construction (3) comprend l'accumulateur d'énergie (13).

10. Machine de traitement des voies ferrées (1) selon l'une quelconque des revendications précédentes, **caractérisée par** une unité de commande (19) pour commander une puissance d'entraînement transmise à la tête de traitement (6).

11. Machine de traitement des voies ferrées (1) selon la revendication 10, **caractérisée en ce que** l'unité de commande (19) est conçue pour détecter une disposition de la machine de traitement des voies ferrées (1) dans au moins une position de traitement.

12. Machine de traitement des voies ferrées (1) selon l'une quelconque des revendications précédentes, **caractérisée par** un découpleur de vibrations (26) agissant entre la tête de traitement (6) et l'au moins une poignée (14, 15a, 15b).

13. Procédé de traitement des voies ferrées au moyen d'une machine de traitement des voies ferrées (1) selon l'une quelconque des revendications 1 à 12.
